Europäisches Patentamt

**European Patent Office**

**Office européen des brevets**

(11) Publication number: **0 349 233**
**A2**

# EUROPEAN PATENT APPLICATION

(21) Application number: **89306436.0**

(22) Date of filing: **26.06.89**

(51) Int. Cl.⁴: **G05D 23/19 , F24D 19/10**

(30) Priority: **27.06.88 GB 8815264**

(43) Date of publication of application:
**03.01.90 Bulletin 90/01**

(84) Designated Contracting States:
**AT BE CH DE ES FR GB GR IT LI LU NL SE**

(71) Applicant: **DAVAIR HEATING LIMITED**
**53/55 Nuffield Road**
**Poole Dorset(GB)**

(72) Inventor: **Palmer, Michael Frank**
**61, Austin Avenue**
**Lilliput Poole Dorset(GB)**

(74) Representative: **BATCHELLOR, KIRK & EYLES**
**2 Pear Tree Court Farringdon Road**
**London EC1R 0DS(GB)**

(54) **A method of, and apparatus for, heating a space.**

(57) A method of and apparatus for heating a space
such as a room, work place or tie like comprising a
gas or oil-fired burner, a heat exchanger and a fan
arranged to blow air from the heat exchanger into
the space and which is operable at high and low
speeds. A first adjustable thermostat serves to con-
trol the output of the burner so that the temperature
of the heated air remains substantially contant and a
second adjustable thermostat, having upper and low-
er settings, is arranged to control the burner and the
speed of the fan depending on the temperature of
the space being heated.

EP 0 349 233 A2

## A METHOD OF, AND APPARATUS FOR, HEATING A SPACE

This invention relates to a method of, and apparatus for, heating a space, such as a room, work place or the like.

It is well known to heat a room in a dwelling, office or a work place, such as a workshop, factory, or the like, by way of heated air. In such arrangements the air is usually heated by way of a heat exchanger in conjunction with a gas or oil fired burner.

In the known arrangement, a burner is energised, usually in response to a timing device, to heat the air in the plenun chamber of a heat exchanger. When the temperature in the plenum chamber reaches a pre-determined level, an air circulating fan is automatically activated to blow the warmed air into the space to be heated. The air temperature within the space gradually increases and, when a predetermined temperature is reached, a thermostatic switch within the space serves to switch off the burner. The fan continues to circulate the air and this reduces the temperature of the air in the plenum chamber of the heat exchanger until the temperature in that chamber falls to a predetermined level. A signal from a thermostat in the plenum chamber then acts to switch off the fan, whereupon the temperature within the heat exchanger rises again by a small amount for a short period of time. The temperature in the heat exchanger then falls again, as does the temperature in the space. When the space temperature drops to a predetermined level, the burner is again switched on, causing the temperature in the heat exchanger to rise and the entire cycle is repeated.

This arrangement has been found to be wasteful of fuel because of the excessive rising and falling of the temperature with the plenum chamber of the heat exchanger as the space thermostat turns the burner on and off. It is also wasteful of power as the fan cools the heat exchanger each time the space thermostat turns the burner off. Furthermore, the stresses imparted to the heat exchanger by its continual heating and cooling are found to cause damage to that unit.

According to the first aspect of the invention, in a method of heating a space, such as a room, work place or the like, are a gas or oil fired burner having a variable heat output is arranged by way of a heat exchanger to heat air directed into the space by a fan operable at high and low speeds and wherein, with the burner operating at its maximum output and the fan operating at its higher speed, the temperature of the air discharged from the heat exchanger is detected and compared with a desired value and, in consequence of the comparison, the output of the burner is controlled to keep the temperature of the air substantially equal to the desired value and the ambient temperature of said space is detected and compared with upper and lower desired values and, in consequence of the comparison, the speed of the fan is reduced to its lower speed when the temperature exceeds the lower desired value and the burner is switched off when the temperature exceeds the upper desired value.

With such an arrangement, the air temperature leaving the heat exchanger and entering the space is kept close to the predetermined temperature for this air independently of whether the fan is operating at its higher or lower speed. Furthermore, when the burner is operating, the heat exchanger temperature is virtually the same whether the fan is on high or low speed and, consequently, there is no waste of fuel in re-heating the heat exchanger each time the burner is turned on, as in the known arrangement.

In accordance with the second aspect of the invention, apparatus for heating a space, such as a room, work place or the like, comprises a gas or oil fired burner having a variable heat output; a heat exchanger in which air is heated by the burner; a fan arranged to blow air from the heat exchange into said space, said fan being operable at high and low speeds; a first adjustable thermostat influenced by the temperature of the air discharged from the heat exchanger and serving to control the output of the burner so that the temperature of the air remains substantially constant at a predetermined level; a second adjustable thermostat influenced by the ambient temperature in said space, said thermostat having upper and lower setting and arranged to switch off the burner when the upper level is exceeded and to switch the fan from its higher speed to its lower speed when the lower level is exceeded.

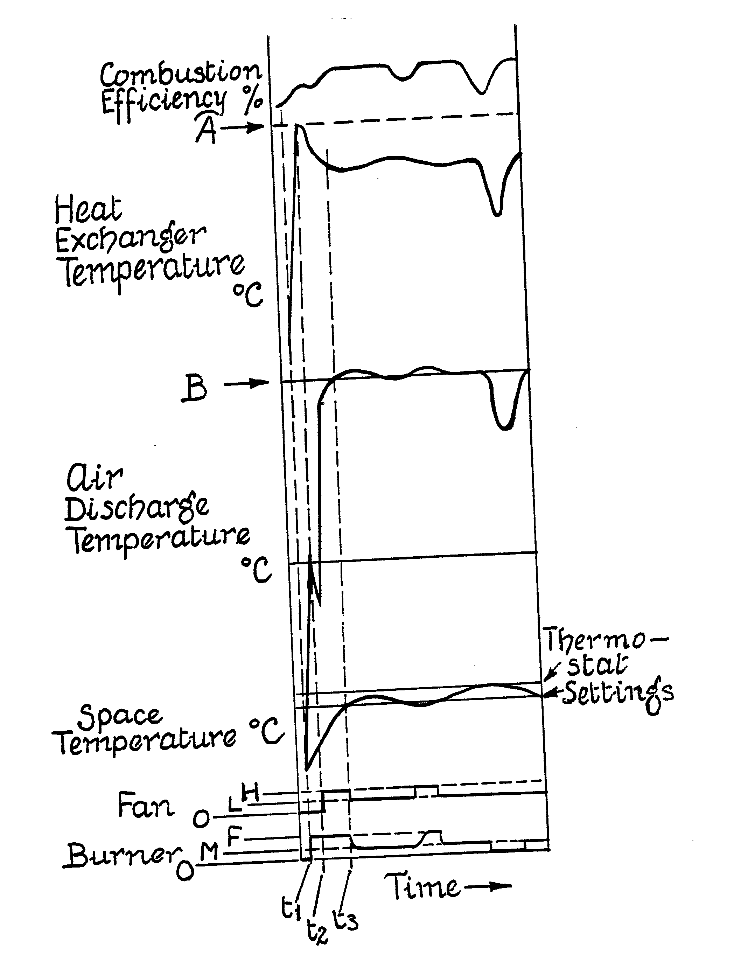

In order that the invention may be more readily understood, it will now be described, by way of example only, with reference to the accompanying drawing which is a series of graphs showing the operation of the apparatus with respect to time.

To heat space, such as a room in a house, an office, a work shop or other work place, apparatus includes a burner operated by oil or gas. Conveniently, the burner is an air atomising oil burner of the type described in EP-A-317178. This burner can operate with a variable heat output and it is used in conjunction with a heat exchanger and a fan having high and low operating speeds. Located in the space to be heated there is a first thermostatic switch of the type having twin settings.

The contacts constituting the lower setting are connected electrically to the fan to cause the fan to be switched to half speed when the ambient temperature in the space exceeds the lower setting of the thermostat. The contacts constituting the upper setting of the thermostat are connected to the burner to cause the burner to be switched off when the ambient temperature exceeds the upper setting. A second thermostatic switch is provided and is pre-set to switch the fan to its upper speed when the temperature in the space initially exceeds the setting of the thermostat.

A third thermostatic switch is positioned within the flow of air emitted from the heat exchanger and prior to entry into the space.

The operation of the arrangement is as follows:- at time t1 the burner is switched on, for example by a time operated switch, and, when the temperature within the heat exchanger reaches a pre-set level A at time t2, the fan is automatically switched on at its higher speed. The temperature of the air discharged from the heat exchanger into the space continues to rise until the setting B of the thermostatic switch is reached whereupon the burner automatically modulates its output according to the setting of the thermostat in the air flow from the heat exchanger independently of whether the fan is operating at high or low speed.

When the temperature in the space reaches the lower level setting of the twin setting thermostat, the fan is automatically switched to half its operating speed (time t3).

If the temperature of the space falls below the lower setting of the thermostat, the burner and the fan automatically switched on to full and high speed, respectively, until the lower setting of that thermostat is again reached, whereupon the fan reverts to its lower speed setting and the burner reverts to its modulating mode.

When the temperature in the space exceeds the higher thermostat setting, the burner is automatically switched off but the fan continues at its lower speed setting until the temperature of the space again falls to the level of the upper setting of the thermostat, whereupon the burner once more is switched on and operates in its modulating mode.

Thus, it will be seen that the heat exchanger temperature maintains a substantially constant level independently of whether the fan is on high or low speed. As a consequence after the initial warm up period the fan is maintained at its lower speed during a large part of its operation with the ensuing saving in power needed to drive the fan. This, combined with the modulating burner, has been found to reduce the running costs of the heating system considerably due to its higher efficiency.

An additional benefit has been found insofar as the heat exchanger temperature remains virtually constant irrespective of whether the fan is on its higher or lower speed and, furthermore, the fan continues to run at its lower speed until the heat exchanger cools down. It is because of these two factors that, not only is the wasteful fuel consumption of the known arrangement eliminated, but, because there is no continuous heating and cooling of the heat exchanger with the constant stresses imparted on it, it has been found the life of the heat exchanger is prolonged considerably.

## Claims

1. A method of heating a space such as a room, work place or the like wherein a gas or oil-fired burner having a variable heat output is arranged by way of a heat exchanger to heat air directed into the space by a fan operable at high and low speeds and wherein with the burner operating at its maximum output and the fan operating at its higher speed, the temperature of the air discharged from the heat exchanger is detected and compared with a desired value and, in consequence of the comparison, the output of the burner is controlled to keep the temperature of the heated air substantially equal to the desired value, and the ambient temperature of the space is detected and compared with upper and lower desired values and, in consequence of the comparison, the speed of the fan is reduced to its lower speed when the temperature of the space exceeds the lower desired value and the burner is switched off when the temperature of the space exceeds the upper desired value.

2. A method as claimed in claim 1 wherein the speed of the fan is increased to its higher speed when the temperature of the space initially exceeds the lower desired value.

3. A method as claimed in claim 1 or claim 2 wherein the output of the burner is automatically modulated according to the temperature of the air emitted from the heat exchanger, independently of whether the fan is operating at high or low speed.

4. An apparatus for heating a space such as a room, work place or the like comprising a gas or oil-fired burner having a variable heat output, a heat exchanger in which air is heated by the burner, a fan arranged to blow air from the heat exchanger into the space, and which is operable at high and low speeds, a first adjustable thermostat influenced by the temperature of the air discharged from the heat exchanger and serving to control the output of the burner so that the temperature of the heated air remains substantially constant at a predetermined level, a second adjustable thermostat influenced by the ambient temperature in the space, the second thermostat having upper and lower settings and being arranged to switch off the burner when the level of the upper setting is exceeded and to switch the fan from its higher speed to its lower speed when the level of the lower setting is exceeded.

5. Apparatus as claimed in claim 4 wherein the second thermostat is arranged to switch the fan to its upper setting when the temperature of the space initially exceeds the setting of the thermostat.

6. Apparatus as claimed in claim 4 or claim 5 wherein the initial switching on of the burner is controlled by a time switch.

7. Apparatus as claimed in any one of claims 4 to 6 wherein a third thermostat is positioned within the flow of air emitted from the heat exchanger and prior to entry into the space.

Combustion Efficiency %

A →

Heat Exchanger Temperature °C

B →

Air Discharge Temperature °C

Thermo-stat Settings

Space Temperature °C

Fan

Burner

H
L
O
F
M
O

t₁ t₂ t₃

Time →